**Europäisches Patentamt**

**European Patent Office**

**Office européen des brevets**

(19)

(11) Veröffentlichungsnummer: **0 041 214**

**A1**

(12) # EUROPÄISCHE PATENTANMELDUNG

(21) Anmeldenummer: 81103999.9

(22) Anmeldetag: 25.05.81

(51) Int. Cl.$^3$: **C 08 F 255/02**
C 08 F 2/18, C 08 L 23/12

(30) Priorität: 04.06.80 DE 3021105

(43) Veröffentlichungstag der Anmeldung:
09.12.81 Patentblatt 81/49

(84) Benannte Vertragsstaaten:
DE FR GB IT

(71) Anmelder: BAYER AG
Zentralbereich Patente, Marken und Lizenzen
D-5090 Leverkusen 1, Bayerwerk(DE)

(72) Erfinder: Grigo, Ulrich, Dr.
Michelsheide 9
D-4152 Kempen 3(DE)

(72) Erfinder: Merten, Josef, Dr.
An der Blankstrasse 33a
D-4052 Korschenbroich(DE)

(72) Erfinder: Binsack, Rudolf, Dr.
Bethelstrasse 4a
D-4150 Krefeld 1(DE)

(54) Verfahren zur Herstellung von polar-modifiziertem Polypropylen und seine Verwendung.

(57) Wäßrige Suspensionen von Polypropylen oder Propylen-Ethylen-Copolymerisaten werden mit einem organischen Lösungsmittel (Kp760: $\geq$ 100°C), das in der Lage ist, das Propylenpolymerisat anzuquellen, verrührt. Anschließend wird das gequollene Propylenpolymerisat (100 Gew.-Teile) mit 4 - 30 Gew.-Teilen eines polaren Monomeren in Gegenwart eines Radikale bildenden Initiators bei $\geq$ 85°C pfropfpolymerisiert. Polare Monomere sind $C_1$-$C_7$-(Meth)Acrylsäurealkylester, (Meth)Acrylsäure, Acrylnitril, Acrylamid, Glycidyl(meth)acrylat, Maleinsäureanhydrid, $\gamma$-(Meth)Acryloyloxy-propyl-trimethoxy-silan und andere.

Das Pfropfpolymerisat wird zur Verbesserung der mechanischen Eigenschaften nicht-modifiziertem, gegebenenfalls glasfaserverstärktem Polypropylen zugesetzt.

EP 0 041 214 A1

BAYER AKTIENGESELLSCHAFT          5090 Leverkusen-Bayerwerk

Zentralbereich
Patente, Marken und Lizenzen          Fr/AB

Verfahren zur Herstellung von polar-modifiziertem Polypropylen und seine Verwendung

Die Erfindung betrifft ein Verfahren zur Herstellung von polarmodifiziertem Polypropylen durch Polymerisation von polaren Vinylmonomeren an bzw. in der Oberfläche von mit organischen Lösungsmitteln angequollenen Polypropylenteilchen, sowie seine Verwendung.

Zur Erhöhung von mechanischen Eigenschaften wie Steifigkeit, Biegefestigkeit, Zugfestigkeit, Schlagzähigkeit, Dimensionsstabilität und anderer Eigenschaften von Glasfaser-verstärktem bzw. gefülltem Polypropylen ist es notwendig, zumindest einen Teil des Polypropylens so zu modifizieren, daß eine verbesserte Haftung zwischen Verstärkungsmaterial und Matrix erreicht wird.

Ein Weg, Polypropylen zu modifizieren, ist die Pfropfpolymerisation von geeigneten Monomeren in Gegenwart von Polypropylen unter dem Einfluß von energiereicher Strahlung. Diese Verfahren, die z.B. in den Patentschriften US-PS 3 290 415 und US-PS 3 347 692 beschrieben werden, sind z.T. sehr wirksam, haben jedoch keine technische Bedeutung erlangt, weil sie besondere Vorrichtungen für die Pfropfpolymerisation unter Bestrahlung voraussetzen, was ein wirtschaftliches und technisches Problem darstellt.

Le A 20 321 - Europa

Verfahren, bei denen Polypropylen im geschmolzenen Zustand in Gegenwart von radikalischen Initiatoren gepfropft wird, sind ebenfalls bekannt (vgl. DE-OS 2 426 972 und US-PS 3 882 194). Diese Verfahren bringen jedoch die Schwierigkeiten mit sich, daß Polypropylen im geschmolzenen Zustand leicht durch einen radikalischen Angriff zu Produkten mit niedrigen Molekulargewichten abgebaut wird.

Es ist auch bekannt, die Pfropfpolymerisation von Polypropylen in Lösung durchzuführen, wobei ein Lösungsmittel wie Xylol oder Chlorbenzol benutzt wird.

Wegen der geringen Löslichkeit des Polypropylens in diesen Lösungsmitteln kann die Polymerisation nur in einer verdünnten Lösung durchgeführt werden. Das Verfahren hat den Nachteil, daß nur relativ geringe Pfropfgrade erreicht werden.

Weiterhin ist es aus der DE-OS 2 658 681 bekannt, Vinyl-Monomere in einem wäßrigen Dispersionssystem in Gegenwart von Polypropylen-Teilchen und Benetzungsmitteln zu polymerisieren. Hier neigt die Polymerisationsreaktion dazu, praktisch nur auf der Oberfläche stattzufinden, da das Polypropylen von den polaren Monomeren, z.B. Acrylamid, Acrylaten u.a. nicht angequollen wird. Dieses Verfahren erlaubt jedoch hohe Polypropylen-Konzentrationen, da die Viskosität der wäßrigen Dispersion praktisch nur vom Wasser bestimmt wird.

Le A 20 321

- 3 -

Bei einem ähnlichen Verfahren, beschrieben in DE-OS 2 640 059, werden die Polypropylen-Teilchen in wäßriger Suspension unterhalb der Zersetzungstemperatur des radikalischen Initiators mit dem Monomeren getränkt und anschließend bei höheren Temperaturen gepfropft. Als pfropfbare Monomere werden Vinylmonomere wie Styrol und Derivate, Alkyl-(meth)-acrylate, Acrylnitril, Acrylamid, Maleinsäureanhydrid sowie Mischungen von Styrol mit den aufgeführten anderen Monomeren verwendet. Durch die vorherige Tränkung der Polypropylen-Teilchen mit dem Monomeren soll der Pfropfgrad erhöht und eine nicht nur an der Oberfläche der Polypropylen-Teilchen stattfindende Pfropfpolymerisation erreicht werden. Eine Tränkung der Polypropylen-Teilchen wird jedoch nur mit Monomeren wie Styrol und Styrol-Derivaten erreicht. Polare Monomere wie Acrylate, Acrylnitril, Acrylamid und Maleinsäureanhydrid quellen Polypropylen nicht an. Sie werden deshalb im Gemisch mit einem quellfähigen Monomeren wie Styrol eingesetzt, wobei Styrol in dem Gemisch stark im Überschuß sein muß, um eine Quellung des Polypropylens zu erreichen. Dieses Verfahren hat den Nachteil, daß polare Monomere nur zusammen mit einem Überschuß an unpolaren Monomeren auf Polypropylen pfropfbar sind, was zu Mischpfropfpolymerisaten führt, die relativ wenig polares Pfropfmonomer enthalten.

Aufgabe der vorliegenden Erfindung war es nun, homogene Polypropylen-Pfropfpolymerisate herzustellen, die Einheiten von nur polaren Monomeren aufgepfropft enthalten.

Le A 20 321

Die Aufgabe wurde dadurch gelöst, daß - ausgehend vom Verfahren der DE-OS 2 640 059 - das Quellen des Polypropylens mit einem dafür geeigneten organischen Lösungsmittel, das die polaren Monomeren enthält, durchgeführt wird. In das gequollene Polypropylen können die polaren Monomeren eindringen und erlauben relativ hohe Pfropfgrade mit den polaren Monomeren.

Gegenstand der Erfindung ist somit ein Verfahren zur Herstellung von modifizierten Polypropylen-Teilchen durch Polymerisation von Vinylmonomeren in wäßriger Suspension, wobei

a)  eine wäßrige Suspension hergestellt wird, die auf 100 bis 2000 Gew.-Tle. Wasser 100 Gew.-Tle. Polypropylen-Teilchen, 4-30 Gew.-Tle eines Vinylmonomeren, und - auf 100 Gew.-Tle. des Monomeren bezogen - 0,1 - 10 Gew.-Tle. eines Radikalkettenpolymerisationsinitiators enthält, der bei einer Temperatur von 80-135°C eine Halbwertszeit von mindestens 2 h aufweist,

b)  die wäßrige Suspension ohne Zersetzung des Initiators erwärmt wird, wobei das Polypropylen angequollen und das Monomere in das Polypropylen eindringt, und anschließend

c)  die wäßrige Suspension so lange auf Temperaturen ≳ 85°C gehalten wird, bis die Polymerisation des

Le A 20 321

Monomeren abgeschlossen ist, dadurch gekennzeichnet, daß das Vinylmonomere ein polares Vinylmonomeres ist, und die wäßrige Suspension zusätzlich 30-1200 Gew.-Tle., bezogen auf 100 Gew.-Tle. des Monomeren, eines organischen Lösungsmittels enthält, das in der Lage ist, Polypropylen anzuquellen, dessen Siedepunkt bei 760 Torr mindestens 100°C beträgt und das mit den Monomeren in beliebigen Verhältnissen mischbar ist

Das vorliegende Verfahren besitzt nicht nur den Vorteil, Polpropylen durch die Zugabe des organischen Lösungsmittels anzuquellen, wodurch ein Eindringen des polaren Monomeren in das Polypropylen ermöglicht wird, sondern es können auch nahezu beliebige Monomerkonzentrationen in sehr homogener Weise durch variable Einstellung des Monomer/Lösungsmittel-Verhältnisses auf bzw. in die Polypropylen-Teilchen gebracht werden. Voraussetzung für eine weitgehend homogene Verteilung des polaren Monomeren im Polypropylen ist, daß organische Lösungsmittel verwandt werden, die in der Lage sind, Polypropylen schon deutlich unterhalb der Zersetzungstemperatur des radikalischen Initiators anzuquellen. Weiterhin sollten die organischen Lösungsmittel völlig mischbar mit den polaren Monomeren sein. Die Siedepunkte der organischen Lösungsmittel sollten bei 760 Torr mindestens 100°C betragen, damit ein Abdestillieren während der Polymerisation möglichst unterbleibt. Andererseits sollten die Siedepunkte auch nicht zu hoch sein, um die organ. Lösungsmittel während der Trocknung der gepfropften Polypropylen-Teilchen leicht entfernen zu können.

Le A 20 321

Als Lösungsmittel kommen in Betracht: aromatische Kohlenwasserstoffe, aliphatische Kohlenwasserstoffe und halogenierte aromatische Kohlenwasserstoffe sowie deren Mischungen mit einem Siedepunkt bei 760 Torr von 100°C bis 250°C, vorzugsweise 110°C bis 160°C. Namentlich seien beispielsweise genannt: Toluol, Xylol, Chlorbenzol, Dichlorbenzol, Cyclohexanon, Diethylenglykoldiethylether, Di-n-butylether.

Vorzugsweise werden Toluol, Xylol, Chlorbenzol und Dichlorbenzol eingesetzt.

Bezogen auf 100 Gew.-Tle. der polaren Monomeren werden 10-1200, vorzugsweise 20-500 Gew.-Tle. der organischen Lösungsmittel eingesetzt.

Unter Polypropylen wird in dieser Anmeldung kristallines Homopolypropylen sowie kristalline Copolymere aus copolymerisierten Einheiten von mindestens 70 Gew.-% Propylen und einem anderen $\alpha$-Olefin, vorzugsweise Ethylen verstanden. Die Polypropylenteilchen sollten vorzugsweise in Form eines Pulvers mit einer mittleren Teilchengröße von 10-2000 nm und mit einer spezifischen Oberfläche von 0,1-10 m$^2$/g vorliegen, um eine schnelle und vollständige Tränkung der Polypropylen-Teilchen mit dem Lösungsmittel bzw. Monomeren zu erreichen.

Das erfindungsgemäße Verfahren ist für die Pfropfpolymerisation von polaren Vinylmonomeren wie C$_1$-C$_7$-Alkylacryla-

Le A 20 321

ten, $C_1$-$C_7$-Alkylmethacrylaten, Acrylnitril, Acrylamid, Acrylsäure, Methacrylsäure, Glycidyl(meth)acrylat, $\gamma$-(Meth)Acryloyloxy-propyl-trimethoxy-silan und/oder Maleinsäureanhydrid auf Polypropylen geeignet. Als besonders geeignet haben sich Vinylmonomere wie Acrylsäure, Glycidylmethacrylat und $\gamma$-Methacryloyloxy-propyl-trimethoxy-silan erwiesen.

Das Vinylmonomere wird nach der Erfindung im allgemeinen in einer Menge zwischen etwa 4-30 Gew.-Tln. auf 100 Gew.-Tle. des Propylen-Polymeren eingesetzt. Bei Mengen über 30 Gew.-Tle. vermag nur noch ein Teil des Monomeren in das Polypropylen einzudringen, so daß im Verlauf der Polymerisation neben Pfropfcopolymerisat auch ein relativ großer Anteil Homopolymerisat aus dem Vinylmonomeren entsteht. Mit steigendem Anteil an Homopolymerisat im Pfropfcopolymerisat nimmt die Homogenität der Teilchen ab. Bei Mengen unter 4 Gew.-Tln. Vinylmonomeren werden die Eigenschaften des Pfropfcopolymerisats praktisch noch nicht beeinflußt.

Der in dem Verfahren nach der Erfindung verwendete Polymerisationsinitiator soll in dem organischen Lösungsmittel und in dem Pfropfmonomeren löslich, in Wasser dagegen unlöslich sein, da die Polymerisation in wäßriger Suspension durchgeführt wird.

Sinnvollerweise sollte die Zersetzungstemperatur des verwendeten Polymerisationsinitiators für eine Halbwertszeit von 2 Stunden etwa 85 -135°C betragen. Wenn der eingesetzte Initiator eine niedrigere Zersetzungstemperatur als 80°C hat, findet die Polymerisation schon im

Le A 20 321

Laufe der Quellung bzw. Tränkung statt, so daß kein homogenes Pfropfcopolymerisat erhalten wird.

Typische Beispiele von Polymerisationsinitiatoren, die sich für das Verfahren der Erfindung eignen, sind Dibenzoylperoxid, tert.-Butylperoxid-2-ethylhexoat, tert.-Butylperoxidiethylacetat und tert.-Butyl-peroxiisobutyrat.

Der Polymerisationsinitiator wird im allgemeinen in einer Menge von etwa 0,1 bis 10 Gew.-Tln. auf 100 Gew.-Tle. Vinyl-Monomeres eingesetzt. Wenn die Menge unter 0,1 Gew.-% liegt, wird das Vinylmonomere nicht vollständig polymerisiert. Ist die Menge größer als etwa 10 Gew.-Tle, so besteht die Gefahr, daß Reste unzersetzten Polymerisationsinitiators im Pfropfcopolymerisat verbleiben, die einen nachteiligen Einfluß auf das Verarbeitungsverhalten des Pfropfcopolymerisats haben. Um eine möglichst vollständige Zersetzung des Polymerisationsinitiators zu erreichen, sollte die Polymerisationsdauer mindestens fünf Halbwertszeiten des Polymerisationsinitiators betragen.

Die Herstellung der wäßrigen Suspension erfolgt so, daß zunächst das Polypropylenpulver mit der entsprechenden Menge Lösungsmittel, Monomer und Polymerisationsinitiator homogen vermischt wird. Diese Mischung wird in Wasser eingerührt, in das ein Suspensionsmittel wie z.B. Polyvinylalkohol oder Methylcellulose in üblicher Menge gelöst wurde.

Le A 20 321

Die Konzentration der Polypropylen-Teilchen in der
wäßrigen Suspension unterliegt keinen besonderen Beschränkungen, vorausgesetzt, daß das System leicht gerührt werden kann. Üblicherweise enthält die Suspension
auf 100 Gew.-Tle Polypropylen 100 bis 2000 Gew.-Tle.
Wasser, vorzugsweise 200 bis 1000 Gew.-Tle. Die wäßrige Suspension wird zunächst mehrere Stunden bei einer
Temperatur unterhalb der Zersetzungstemperatur des Polymerisationsinitiators, vorzugsweise bei 40 bis 85°C gerührt. Hierbei werden die Polypropylenteilchen durch das
organische Lösungsmittel angequollen, wodurch gleichzeitig das Vinylmonomere zusammen mit dem Polymerisationsinitiator in das Polypropylen eindringen kann. Anschließend wird die Polymerisation bei einer Temperatur
von 85°C bis 150°C durchgeführt. Bei Temperaturen bis
100°C kann die Polymerisation bei Normaldruck, bei Temperaturen über 100°C muß sie unter Druck durchgeführt
werden. Die Temperatur braucht nicht im Verlaufe der
Polymerisation konstant zu sein, sondern kann auch
stufenweise variiert bzw. gesteigert werden.

Die Polymerisationszeit liegt gewöhnlich im Bereich von
etwa 3 bis 12 h.

Die Gestalt der Polypropylen-Teilchen sowie die Viskosität der Suspension bleiben während der Polymerisation praktisch unverändert. Die erhaltene Polymerisationsmischung wird nach der Polymerisation abgekühlt und
dann in derselben Weise weiterbehandelt, wie es bei der
gewöhnlichen Polymerisation in wäßriger Suspension geschieht. Das nach der Erfindung hergestellte Copolymerisat zeichnet sich dadurch aus, daß sich in dem

Le A 20 321

Polypropylen-Pfropfcopolymerisat aus nahezu kugelförmigen Teilchen die Pfropfäste nicht nur auf der Teilchenoberfläche, sondern auch - bedingt durch die Quellung - in den Polypropylen-Teilchen befinden.

Durch Verwendung eines geeigneten Lösungsmittels zum Quellen lassen sich somit durchweg höhere Pfropfgrade erzielen als bei Pfropfpolymerisationen ohne Lösungsmittel (vgl. Tabelle 1 im Anhang).

Die polar-modifizierten Polypropylen-Teilchen eignen sich besonders als Zusatz (ca. 1 bis 50 Gew.-%, vorzugsweise 3 bis 20 Gew.-%, bezogen auf Gesamtmischung) zu Glasfaser- und Füllstoff-haltigem Polypropylen, wodurch eine bessere Haftung zwischen Füllstoff bzw. Glasfaser und Matrix erzielt wird. Solchermaßen modifizierte Polypropylen-Compounds besitzen im Vergleich zu unmodifizierten Polypropylen-Compounds eine wesentlich höhere Biegefestigkeit und Schlagzähigkeit. Weiterhin bewirken Zusätze von polarmodifiziertem Polypropylen zu unmodifiziertem Polypropylen eine bessere Lackierfähigkeit und Bedruckbarkeit. Zusätze von polarmodifiziertem Polypropylen verbessern in Abmischungen von Polypropylen mit polaren Kautschuken wie Ethylen-Vinylacetat-Copolymerisaten, Acrylat-Kautschuken, Acrylnitril-Butadien-Kautschuken u.a. die Ankoppelung Polypropylen/Kautschuk.

Die in den Beispielen angegebenen Teile und Prozente beziehen sich auf das Gewicht, sofern nicht anders vermerkt. PP bedeutet Polypropylen.

Le A 20 321

Beispiel 1

zu 300 ml Wasser, versetzt mit 1,5 g Emulgator, werden 100 g Polypropylen-Pulver, das zuvor mit 10 Teilen n-Butylacrylat, 30 Teilen Chlorbenzol und 0,5 g Benzoylperoxid homogen vermischt wurde, unter Rühren und Stickstoffüberleitung gegeben. Die Suspension wird zwei Stunden bei 60°C und 4 Stunden bei 90 -95°C gerührt. Nach dem Abkühlen wird das gepfropfte Polypropylen-Pulver abgesaugt, mit Ethanol gewaschen und bei 60°C im Wasserstrahlvakuum getrocknet. Das erhaltene Pfropfpolymerisat ähnelt im Aussehen dem eingesetzten Polypropylen. Es besitzt auch das gleiche Schüttverhalten. Die Menge an n-Butylacrylat auf dem Polypropylen läßt sich IR-spektroskopisch oder mittels Sauerstoff-Analyse bestimmen. Pfropfgrad: 48 %.

Beispiel 2

Wie Beispiel 1, jedoch werden anstelle von 10 Teilen n-Butylacrylat 10 Teile t-Butylacrylat eingesetzt. Pfropfgrad: 39 %.

Beispiel 3

Wie Beispiel 1, jedoch werden anstelle von n-Butylacrylat 10 Teile Acrylsäure eingesetzt. Pfropfgrad: 96%.

Beispiel 4

Wie Beispiel 1, jedoch wird anstelle eines Polypro-pylen-Homopolymerisats ein pulverförmiges Polypropylen-

Le A 20 321

copolymerisat, das ca. 3 Gew.-% Ethylen in Form von
Blöcken copolymerisiert enthält, eingesetzt. Pfropfgrad 47 %.

Beispiel 5

Wie Beispiel 4, jedoch werden anstelle von 10 Teilen
n-Butylacrylat 10 Teile Acrylsäure eingesetzt. Pfropfgrad 93 %.

Beispiel 6

Wie Beispiel 1, jedoch werden anstelle von 10 Teilen
n-Butylacrylat und 30 Teilen Chlorbenzol 2 Teile Methacrylsäure und 10 Teile Chlorbenzol eingesetzt. Pfropfgrad 19 %.

Beispiel 7

In Tabelle 1 sind Polypropylenpfropfcopolymerisate zusammengestellt, die in Abwesenheit bzw. in Gegenwart
eines Quellungslösungsmittels hergestellt wurden, und
zwar gemäß den Bedingungen des Beispiels 1. Die in Gegenwart von Chlorbenzol als Quellungslösungsmittel hergestellten Pfropfcopolymerisate weisen stets höhere
Pfropfgrade auf als entsprechende Pfropfpolymerisate,
die ohne Quellungslösungsmittel hergestellt wurden.

Als Vergleich sind auch Pfropfcopolymerisate aufgeführt,
die entsprechend der DE-OS 2 640 059 mit Styrol als

Le A 20 321

Quellungsmittel hergestellt worden sind. Sie weisen merklich niedrigere Pfropfgrade auf als solche, die mit Chlorbenzol hergestellt wurden.

Die Pfropfgrade wurden ermittelt, indem das Polypropylen-Pfropfcopolymerisat einprozentig in Xylol eine halbe Stunde lang unter Rückfluß erhitzt wurde. Anschließend wird die heiße Lösung in die gleiche Menge kalten Ethylacetats unter Rühren gegeben. Die erhaltene Mischung wird einen Tag bei Raumtemperatur stehengelassen, wobei das Polypropylen-Pfropfcopolymerisat ausfällt. Das ausgefällte Produkt wird abfiltriert, getrocknet und auf nicht gelöste Pfropfanteile (IR-Spektrum, Sauerstoffanalyse) untersucht. Als Pfropfgrad wird das Verhältnis des auf dem Polypropylen nach dem Umfällen verbliebenen Anteils an Pfropfmonomer zu dem vor dem Umfällen ermittelten definiert.

Beispiel 8

In der Tabelle 2 sind ausgewählte mechanische Eigenschaften von Glasfaser-verstärkten Polypropylen-Compounds gegenübergestellt. Die mit Acrylsäure gepfropftem PP versetzten Compounds besitzen ein deutlich höheres Eigenschaftsniveau als ein Compound mit ungepfropftem Polypropylen (Compounds 2 und 3 im Vergleich zu Compound 1). Vergleicht man jedoch die Compounds 2 und 3 untereinander, die beide 10 Tle. Acrylsäure-gepfropftes Polypropylen enthalten, so besitzt Compound 3 eine wesentlich höhere Festigkeit und Kerbschlagzähigkeit als Compound 2. Compound 3 enthält ein Acrylsäure-gepfropftes Polypropylen, das mit einem Zusatz an organischem Lösungsmittel gepfropft wurde, während Compound 2 Acrylsäure-gepfropftes Polypropylen enthält, das ohne Zusatz eines organischen Lösungsmittels gepfropft worden ist.

Das für Compound 2 (Vergleichsbeispiel) verwendete, ohne Zusatz eines organischen Lösungsmittels gepfropfte Polypropylen entspricht dem Pfropfcopolymerisat des Tests 3 aus Tabelle 1 und das für Compound 3 (Beispiel gemäß Erfindung) eingesetzte, in Gegenwart von Chlorbenzol gepfropfte Polypropylen dem Pfropfcopolymerisat des Tests 4 aus Tabelle 1.

Le A 20 321

Tabelle 1: PP-Pfropfcopolymerisate

| PP-Pulver[1] | | Pfropfmonomer Menge Typ | Auf dem PP verbleibender Pfropfmonomer-anteil vor dem Umfällen[2] | Auf dem PP verbleibender Pfropfmonomer-anteil nach dem Umfällen[2] | Pfropfgrad | Quellungslösungsmittel: Chlorbenzol |
|---|---|---|---|---|---|---|
| Test | Tle. | Tle | % | % | % | |
| 1 | 100 Vergleich | 10 n-Butylacrylat | 8,2 | 1,3 | 16 | – |
| 2 | 100 Erfindung | 10 " | 9,4 | 4,5 | 48 | 20 Tle |
| 3 | 100 Vergleich | 10 Acrylsäure | 8,5 | 5,2 | 61 | – |
| 4 | 100 Erfindung | 10 " | 9,2 | 9,0 | 98 | 20 Tle |
| 5 | 100 Vergleich | 10 Methacrylsäure | 8,9 | 1,5 | 17 | – |
| 6 | 100 Erfindung | 10 " | 9,4 | 3,5 | 37 | 20 Tle |
| 7 | 100 Vergleich | 10 γ-Methacryloyloxy-propyl-trimethoxy-silan | 5,4 | 4,2 | 78 | – |
| 8 | 100 Erfindung | 10 " | 7,3 | 6,5 | 89 | 20 Tle |
| 9 | 100 Vergleich | 10 n-Butylacrylat | 7,2[3] | 1,3[3] | 18 | 20 Tle Styrol |
| 10 | 100 Vergleich | 10 Acrylsäure | 2,4[3] | 0,3[3] | 12 | 20 Tl Styrol |

1) durchschnittliche Teilchengröße 400 nm; PP = Polypropylen

2) IR-spektroskopisch und über Sauerstoffanalyse ermittelt (Mittelwerte)

3) Prozentangaben beziehen sich nur auf die polaren Anteile

0041214

Tabelle 2: Ausgewählte mechanische Eigenschaften von Glasfaser-verstärkten Polypropylen-Compounds [4]

| | | Compounds (Vergleichsbeispiel) | Compound 2 (Vergleichsbeispiel) | Compound 3 Beispiel gem. Erfindung |
|---|---|---|---|---|
| Zusammensetzung der Compounds | | 70 Tle unge-pfropftes PP | 60 Tle ungepfropftes PP | 60 Tle ungepfropftes PP |
| | | | 10 Tle Acrylsäure-gepfropftes PP[2] | 10 Tle Acrylsäure-gepfropftes PP[3] |
| | | 30 Tle Glasfasern[1] | 30 Tle Glasfasern[1] | 30 Tle Glasfasern[1] |
| Zugfestigkeit DIN 54 455 | MPa | 41,1 | 60,7 | 86,5 |
| Biegefestigkeit DIN 53 452 | MPa | 81,8 | 96,4 | 130 |
| Kerbschlagzähig-keit bei 20°C DIN 53 453 | kJ/m$^2$ | 3930 | 3940 | 4130 |

1) Kurzglasfasern, überzogen mit einer basischen Schlichte

2) Pfropfung wurde ohne Zusatz eines organischen Lösungsmittels durchgeführt (Pfropfgrad 61 %, Test 3)

3) Pfropfung wurde mit Zusatz eines organischen Lösungsmittels durchgeführt (Pfropfgrad 98 %, Test 4)

4) Die Herstellung der Compounds erfolgte durch Extrudieren bei 180° bis 250°C auf einer Zweiwellen-schnecke des Typs ZSK 32 der Firma Werner und Pfleiderer.

## Patentansprüche

1) Verfahren zur Herstellung von modifizierten Polypropylen-Teilchen durch Polymerisation von Vinylmonomeren in wäßriger Suspension, wobei

a) eine wäßrige Suspension hergestellt wird, die auf 100 bis 2000 Gew.-Tle. Wasser 100 Gew.-Tle. Polypropylen-Teilchen, 4-30 Gew.-Tle. eines Vinylmonomeren, und - auf 100 Gew.-Tle. des Monomeren bezogen - 0,1-10 Gew.-Tle. eines Radikalkettenpolymerisationsinitiators enthält, der bei einer Temperatur von 80-135°C eine Halbwertszeit von mindestens 2 h aufweist,

b) die wäßrige Suspension ohne Zersetzung des Initiators erwärmt wird, wobei das Polypropylen angequollen wird und das Monomere in das Polypropylen eindringt, und anschließend

c) die wäßrige Suspension so lange auf Temperaturen ≥ 85°C gehalten wird, bis die Polymerisation des Monomeren abgeschlossen ist, dadurch gekennzeichnet, daß das Vinylmonomere ein polares Vinylmoneres ist und die wäßrige Suspension zusätzlich 30-120 Gew.-Tle, bezogen auf 100 Gew.-Tle des Monomeren, eines organischen Lösungsmittels enthält, das in der Lage ist, Polypropylen anzuquellen, dessen

Le A 20 321

Siedepunkt bei 760 Torr mindestens 100°C beträgt und das mit den Monomeren in beliebigen
Verhältnissen mischbar ist.

2) Verfahren nach Anspruch 1, dadurch gekennzeichnet,
daß als Vinylmonomere $C_1$-$C_7$-Alkylacrylate, $C_1$-$C_7$-
Alkylmethacrylate, (Meth)Acrylnitril, (Meth)Acrylamid,
Acrylsäure, Methacrylsäure, Glycidyl(meth)acrylat, $\gamma$-(Meth)-
Acryloyloxypropyltrimethoxy-silan, Maleinsäureanhydrid oder
deren Mischungen verwendet werden.

3) Verfahren nach Anspruch 1, dadurch gekennzeichnet,
daß als Lösungsmittel aromatische Kohlenwasserstoffe,
aliphatische Kohlenwasserstoffe und halogenierte
aromatische Kohlenwasserstoffe verwendet werden.

4) Verfahren nach Anspruch 1, dadurch gekennzeichnet,
daß als Lösungsmittel Chlorbenzol, Dichlorbenzol,
Toluol oder Xylol oder ein Gemisch dieser Lösungsmittel verwendet wird.

5) Verwendung der gemäß Anspruch 1 erhaltenen polarmodifizierten Polypropylenteilchen als Zusatz zu
nichtmodifiziertem Polypropylen oder nichtmodifiziertem, glasfaserverstärktem Polypropylen in Mengen
von 1 bis 50 Gew.-%, bezogen auf Gesamtmischung.

## Europäisches Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | GB - A - 1 312 325 (BORG WARNER) | | C 08 F 255/02<br>2/18<br>C 08 L 23/12 |
| A | EP - A - 0 001 313 (STAMICARBON BV) | | |
| | FR - A - 1 326 931 (HOECHST) | 1,2 | |
| | * Seite 2, linke Spalte, letzter Absatz * | | |
| | --- | | |
| A | FR - A - 1 293 457 (MONTECATINI) | | |
| | * Zusammenfassung 1 * | | |
| | --- | | |
| A/D | DE - A - 2 640 059 (MITSUBISHI) | | **RECHERCHIERTE SACHGEBIETE (Int. Cl.³)** |
| | CHEMICAL ABSTRACTS, Band 92, Heft 4, Januar 1980, Seite 8, Zusammenfassung 22927j, COLUMBUS, OHIO (US) P. CITOVICKY et al.: "Grafting of polypropylene by water-soluble monomers in water emulsion" & Prepr. Short Contrib.-Bratislava IUPAC Int. Conf. Modif. Polym., 5th 1979 1, 89-93 | 1 | C 08 F 255/00<br>255/02 |
| | * Insgesamt * | | |
| | --- | | |
| A | FR - A - 2 289 536 (BASF) | | **KATEGORIE DER GENANNTEN DOKUMENTE** |
| | * Anspruch 1; Seite 2, Zeilen 14-17 * | | X: von besonderer Bedeutung |
| | & DE - A - 2 450 672 | | A: technologischer Hintergrund |
| | | | O: nichtschriftliche Offenbarung |
| | ---------- | | P: Zwischenliteratur |
| | | | T: der Erfindung zugrunde liegende Theorien oder Grundsätze |
| | | | E: kollidierende Anmeldung |
| | | | D: in der Anmeldung angeführtes Dokument |
| | | | L: aus andern Gründen angeführtes Dokument |
| | | | &: Mitglied der gleichen Patentfamilie, übereinstimmendes Dokument |

| Der vorliegende Recherchenbericht wurde für alle Patentansprüche erstellt. | | |
|---|---|---|
| Recherchenort<br>Den Haag | Abschlußdatum der Recherche<br>11.09.1981 | Prüfer<br>MEULEMANS |

EPA form 1503.1  06.78